## Europäisches Patentamt

## European Patent Office

## Office européen des brevets

(11) Veröffentlichungsnummer: **0 119 205**
**B1**

(19)
(12) **EUROPÄISCHE PATENTSCHRIFT**

(45) Veröffentlichungstag der Patentschrift:
**12.03.86**

(51) Int. Cl.⁴: **C 02 F 3/12,** C 02 F 3/20

(21) Anmeldenummer: **83901906.4**

(22) Anmeldetag: **23.06.83**

(86) Internationale Anmeldenummer:
**PCT/DE 83/00113**

(87) Internationale Veröffentlichungsnummer:
**WO 84/00535 (16.02.84 Gazette 84/5)**

(54) **ANLAGE ZUR BEHANDLUNG VON SCHMUTZWASSER MIT BIOMASSE NACH AEROBISCHEM VERFAHREN.**

(30) Priorität: **23.07.82 DE 3227571**

(43) Veröffentlichungstag der Anmeldung:
**26.09.84 Patentblatt 84/39**

(45) Bekanntmachung des Hinweises auf die Patenterteilung:
**12.03.86 Patentblatt 86/11**

(84) Benannte Vertragsstaaten:
**AT CH DE FR GB LI NL**

(56) Entgegenhaltungen:
**DE - A - 1 950 787**
**DE - A - 2 364 933**
**DE - A - 2 620 634**
**FR - A - 2 090 420**
**US - A - 3 872 003**
**US - A - 3 928 199**

(73) Patentinhaber: **HOMPF, Dieter,**
**Wilhelm-Spaeth-Strasse 35, D-8500 Nürnberg 40 (DE)**

(72) Erfinder: **HOMPF, Dieter, Wilhelm-Spaeth-Strasse 35,**
**D-8500 Nürnberg 40 (DE)**

(74) Vertreter: **LOUIS, PÖHLAU, LÖHRENTZ & SEGETH,**
**Kesslerplatz 1 P.B. 3055, D-8500 Nürnberg (DE)**

## Beschreibung

Die Erfindung betrifft eine Vorrichtung zur Aufbereitung von Abwasser mit Hilfe von Biomasse nach dem aeroben Verfahren, mit einem mindestens einen vertikalen Rohrabschnitt umfassenden Rohrkörper mit einem Abwassereinlauf an einem Ende und einem Abwasserauslauf am entgegengesetzten Ende, wobei eine Belüftungseinrichtung an dem abwassereinlaufseitigen Ende vorgesehen ist.

Bei bekannten Vorrichtungen ist für gewöhnlich ein Becken mit einer Tiefe von ca. 4 m vorgesehen, in dem am Boden eine Vielzahl von Belüftungseinrichtungen in Form von perforierten Scheiben mit einem Durchmesser von ca. 250 mm angeordnet sind, die zueinander einen Abstand von 2 m und mehr aufweisen. Das Abwasser, das in das Becken geleitet wird, ist bzw. wird mit einer Biomasse versetzt, zu deren Aktivierung Luft notwendig ist, welche über die Belüftungseinrichtungen am Boden des Beckens dem Abwasser zugeführt wird.

Eine solche Vorrichtung weist zahlreiche Nachteile auf. Der erste Nachteil ist in dem platzraubenden Bauwerk selbst zu sehen, zu dessen Erstellung umfangreiche Erdbewegungen sowie Maurerarbeiten notwendig sind. In verfahrenstechnischer Hinsicht erweist sich das Lösen ausreichender Mengen an Luft im Abwasser als schwierig. Setzt man die Belüftungseinrichtungen zu nahe aneinander, um durch eine grössere Anzahl von Belüftungseinrichtungen eine grössere Menge an Luft in das Abwasser zu leiten, so besteht die Gefahr, dass die Luftblasen aus den einzelnen Belüftungseinrichtungen zu grösseren Luftblasen konglomerieren, die dann mehr oder weniger ungenutzt an die Abwasseroberfläche steigen. Auch wird das Lösen der Luft, genauer gesagt des Sauerstoffs, dadurch ungünstig beeinflusst, dass das Becken offen ist und daher nur unter dem Druck der Umgebungsluft steht, der ja den Grad der Sättigung des Abwassers mit Sauerstoff bestimmt. Da das Becken offen ist, lässt sich auch eine Geruchsbelästigung der umliegenden Anwohner nicht vermeiden.

Aus DE-A Nr. 2620634 ist eine Vorrichtung der eingangs genannten Art bekannt. Bei dieser Vorrichtung wird das Sauerstoff-abgebende Gas in situ erzeugt oder mittels einer Düse eingebracht, d.h. es wird auch hier nur örtlich begast.

Der Erfindung liegt nun die Aufgabe zugrunde, eine Vorrichtung zur Aufbereitung von Abwasser mit Hilfe von Biomasse nach dem aeroben Verfahren derart auszubilden, dass trotz geringer Herstellungskosten und geringem Platzbedarf mit ihr das Abwasser besser als nach dem Stand der Technik belüftet werden kann.

Diese Aufgabe wird erfindungsgemäss dadurch gelöst, dass die Belüftungseinrichtung geeignet ist, über praktisch den gesamten Querschnitt des Rohrkörpers zu belüften.

Da bei der erfindungsgemässen Vorrichtung praktisch über den gesamten Querschnitt des Rohrkörpers belüftet wird, gibt es keine umliegenden Bereiche, die nicht direkt von der Belüftungseinrichtung erfasst werden. Die Belüftung erfolgt daher intensiver als in einem Becken.

Vorzugsweise ist der Rohrkörper gegenüber der Atmosphäre abgeschlossen, so dass die Lösungsmenge der Luft bzw. des Sauerstoffes im Abwasser nicht mehr durch den Atmosphärendruck begrenzt, sondern durch den Druck bestimmt wird, unter dem die Luft in den Rohrkörper eingespeist wird. Ausserdem wird durch die geschlossene Ausbildung eine Geruchsbelästigung vermieden. Vorzugsweise schliesst sich an den vertikalen Rohrabschnitt des Rohrkörpers ein horizontaler Rohrabschnitt an, an dem diverse Regel- und Überwachungseinrichtungen vorgesehen werden können.

Eine Verlängerung des Rohrkörpers mit dem Ziel, auf diese Weise die Reaktionszeit der Biomasse mit dem Sauerstoff zu verlängern, ohne dabei Tiefe und seitliche Ausdehnung der Vorrichtung übermässig zu vergrössern, lässt sich dadurch erreichen, dass an dem horizontalen Rohrabschnitt stromabwärts nochmals ein vertikaler Rohrabschnitt angefügt wird.

Die wirksame Belüftungsfläche der Belüftungseinrichtung kann gesteigert werden, wenn die Belüftungseinrichtung kalottenförmig, kegelförmig, kegelstumpfförmig oder zylindrisch ausgebildet wird.

Durch eine Parallel- oder Serienschaltung mehrerer Rohrkörper lässt sich ausserdem eine Leistungssteigerung der Vorrichtung bei gleichzeitig äusserst geringem Platzbedarf erreichen.

Weitere Vorteile, Einzelheiten und Merkmale der Erfindung ergeben sich aus der nachstehenden, anhand der beiliegenden Zeichnung erfolgenden Beschreibung eines bevorzugten Ausführungsbeispiels. In der Zeichnung stellen dar:

Fig. 1 schematisch die Anordnung der erfindungsgemässen Vorrichtung in einer Abwasseraufbereitungsanlage und

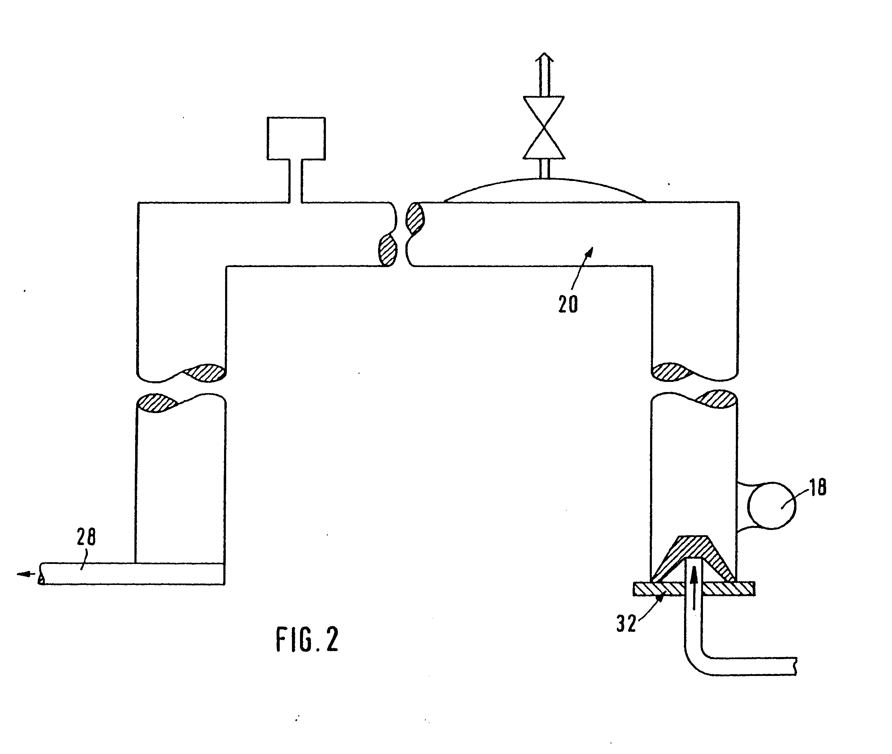

Fig. 2 ein bevorzugtes Ausführungsbeispiel der erfindungsgemässen Vorrichtung.

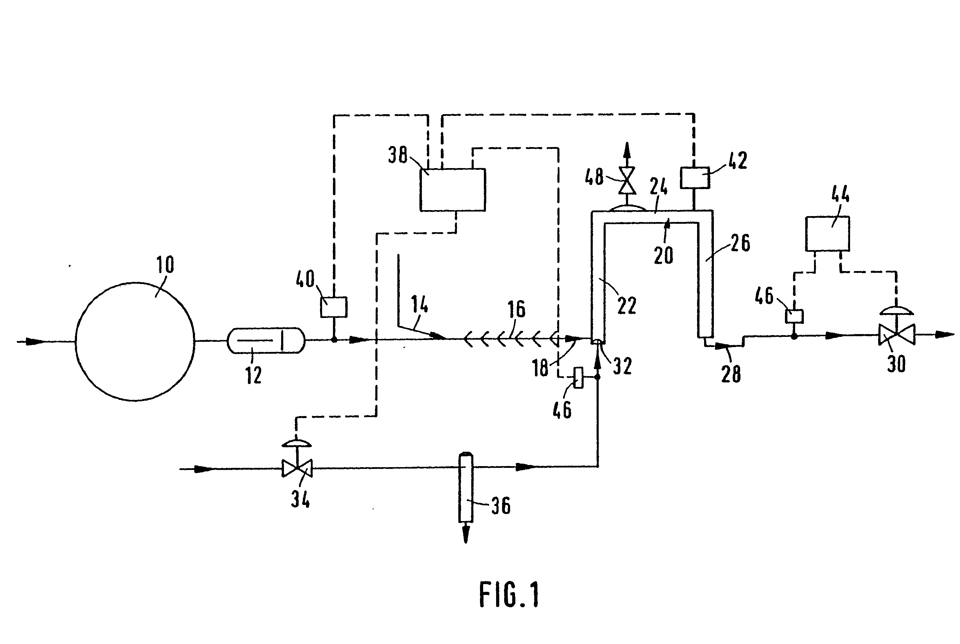

In Fig. 1 kommt das Abwasser, nachdem der erforderliche pH-Wert und die Temperatur eingestellt sind, von links nach Durchlaufen einer Filtereinrichtung zum Zurückhalten grober Verunreinigungen in einen Puffertank 10, der eine kontinuierliche Beschickung der Anlage über eine stufenlose regelbare Verdrängerpumpe 12 gewährleistet. An einer Impfstelle 14 wird dem Abwasser durch Sauerstoff aktivierbare Biomasse zugeführt, die die unerwünschten Stoffe im Abwasser auf biologischem Wege abbaut. Eine Vermischung zwischen dem Abwasser und der Biomasse findet in der auf die Impfstelle 14 folgenden Mischstrecke 16 statt. An die Mischstrecke 16 schliesst sich der Wassereinlauf 18 zu einem im wesentlichen U-förmig gebogenen Rohrkörper 20 an, der einen vertikalen Rohrabschnitt 22 aufweist, dessen unteres Ende mit dem Wassereinlauf 18 verbunden ist, sowie einen am oberen Ende des vertikalen Rohrabschnittes 22 sich anschliessenden horizontalen Rohrabschnitt 24 und einen an den horizontalen Rohrabschnitt 24 sich anschliessenden vertikalen Rohrabschnitt 26, an dessen unterem Ende der Wasserauslauf 28 vorgesehen ist. Der Durchmesser des Rohrkörpers 20 kann beispielsweise 250 mm betragen, wobei die Höhe des Rohrkörpers ca. 4 m betragen kann. Zum Wasserauslauf 28 gelangt dann das aufbereitete Abwasser über ein Ventil 30 aus der Anlage.

Der Boden des vertikalen Rohrabschnittes 22 des Rohrkörpers 20 wird von einer Belüftungseinrichtung 32 mit einer kegelstumpfförmigen Belüftungsfläche 34 gebildet. Dabei ist die wirksame Querschnittsfläche der Belüftungseinrichtung im wesentlichen gleich der Querschnittsfläche des vertikalen Rohrabschnittes. Die der Belüftungseinrichtung 32 zugeführte Druckluft wird dabei nach Durchströmen eines Steuerventils 34 in einem Ölfeinstfilter 36 gereinigt.

Eine Sauerstoffregeleinrichtung 38 erfasst mit dem Fühler 40 den Sauerstoffgehalt des der Aufbereitungsanlage zugeführten Abwassers und mit dem Fühler 42 den Sauerstoffgehalt des Abwassers stromabwärts von der Belüftungseinrichtung 32 – nachdem also von aussen Sauerstoff in das Abwasser eingeleitet worden ist – und regelt in Abhängigkeit von der Differenz der Ausgangswerte der Fühler 40 und 42 sowie eines Bezugswertes die Luftzufuhr über die Belüftungseinrichtung 32 mit Hilfe des Steuerventils 34. Das Bezugszeichen 46 bezeichnet eine bekannte Flüssigkeitsüberwachung, die eine Überflutung der Drucklufteinrichtung verhindert.

Der Druck im Rohrkörper 20 wird mit Hilfe der Drucküberwachungseinrichtung 44 geregelt, die bei 46 den Druck misst und über das Ventil 30 den Druck des Abwassers stromabwärts von der Förderpumpe 12, insbesondere also auch im Rohrkörper 20 einstellt. Das System ist also zwischen der Förderpumpe 12 und dem Abwassersteuerventil 30 sowie dem Druckluftsteuerventil 34 nach aussen (gegenüber der Atmosphäre) geschlossen.

Das über die Verdrängerpumpe 12 geförderte Abwasser, dessen Sauerstoffgehalt mit dem Fühler 40 erfasst wird, gelangt nach dem Impfen mit Biomasse in den Rohrkörper 20, dessen Strömungsquerschnitt erheblich grösser als der des Abwasserzulaufes 18 ist, so dass die Strömungsgeschwindigkeit des Abwassers schlagartig abnimmt. Dadurch wird das Lösen der Luft im Abwasser, die über die Belüftungseinrichtung 32 zugeführt wird, aufgrund der relativ langen, zum Lösen zur Verfügung stehenden Zeit begünstigt. Der Vorgang des Lösens der Luft im Abwasser ist im wesentlichen stromab vom vertikalen Rohrabschnitt 22 des Rohrkörpers 20 abgeschlossen, und der horizontale Rohrabschnitt 24 sowie der sich daran anschliessende vertikale Rohrabschnitt 26 dienen im wesentlichen dazu, die Reaktionszeit der Luft mit der Biomasse sowie die für den Abbau der Stoffe durch die Bakterien zur Verfügung stehenden Zeit zu vergrössern, wobei desto mehr Sauerstoff in das Abwasser gelangt, je grösser der Druck im Rohrkörper 26 gewählt wird, der mit dem Steuerventil 30 eingestellt wird, und je mehr Sauerstoff bzw. Luft dem Rohrkörper 20 über das Ventil 34 zugeführt wird.

Da die Anlage in sich geschlossen ist, kann auch ohne weiteres ein anderes Gas als Luft oder Sauerstoff zum Aktivieren von für derartige andere Gase geeigneten Biomassen verwendet werden.

Wie dem Fachmann nicht näher erläutert werden muss, können zur Leistungssteigerung Parallel- oder Serienschaltungen von Rohrkörpern 20 der gezeigten Art zur Anwendung gelangen.

Im Gegensatz zum Stand der Technik, bei dem üblicherweise eine Vielzahl von Speichern erforderlich ist, kann bei einem Vorgehen nach der Erfindung die Anzahl der Speicher erheblich vermindert werden, da es nicht erforderlich ist, sehr grosse Mengen Abwasser zur Aufbereitung über längere Zeit hinweg zu speichern.

## Patentansprüche

1. Vorrichtung zur Aufbereitung von Abwasser mit Hilfe von Biomasse nach dem aeroben Verfahren, mit einem mindestens einen vertikalen Rohrabschnitt (22) umfassenden Rohrkörper (20) mit einem Abwassereinlauf (18) an einem Ende und einem Abwasserauslauf (22) am entgegengesetzten Ende, wobei eine Belüftungseinrichtung (32) an dem abwassereinlaufseitigen Ende vorgesehen ist, dadurch gekennzeichnet, dass die Belüftungseinrichtung (32) geeignet ist, über praktisch den gesamten Querschnitt des Rohrkörpers (20) zu belüften.

2. Vorrichtung nach Anspruch 1, dadurch gekennzeichnet, dass der Rohrkörper (22) gegenüber der Atmosphäre abgeschlossen ist.

3. Vorrichtung nach Anspruch 2, dadurch gekennzeichnet, dass sich an den vertikalen Rohrabschnitt (22) des Rohrkörpers (20) ein horizontaler Rohrabschnitt (24) anschliesst.

4. Vorrichtung nach Anspruch 3, dadurch gekennzeichnet, dass sich an den horizontalen Rohrabschnitt (24) stromabwärts ein vertikaler Rohrabschnitt (26) anschliesst.

5. Vorrichtung nach Anspruch 3 oder 4, dadurch gekennzeichnet, dass am horizontalen Rohrabschnitt (24) eine Sauerstoff-Differenzmess- und -regeleinrichtung zur Einstellung des Sauerstoffgehaltes des Abwassers vorgesehen ist.

6. Vorrichtung nach einem der Ansprüche 3 bis 5, dadurch gekennzeichnet, dass am horizontalen Rohrabschnitt (20) ein Entlüftungsventil (48) vorgesehen ist.

7. Vorrichtung nach einem der Ansprüche 1 bis 6, dadurch gekennzeichnet, dass die wirksame Fläche (34) der Belüftungseinrichtung (32) kalottenförmig, kegelförmig, kegelstumpfförmig oder zylindrisch ausgebildet ist.

8. Vorrichtung nach einem der Ansprüche 1 bis 7, dadurch gekennzeichnet, dass mehrere Rohrkörper (20) mit Belüftungseinrichtungen (32) parallel oder in Serie geschaltet sind.

## Claims

1. A device for the treatment of sewage by biomass means according to the aerobic method with a tubular body (20) comprising at least one vertical tube section (22) with a sewage inlet (18) at one end and a sewage outlet (22) at the opposite end, provision being made for an aeration device (32) at the end of the sewage inlet, characterized in that the aeration device (32) is capable of aeration over practically the whole cross-section of the tubular body (20).

2. A device according to Claim 1, characterized in that the tubular body (22) is closed in relation to the atmosphere.

3. A device according to Claim 2, characterized in that the vertical tubular section (22) of the tubular body (20) is followed by a horizontal tubular section (24).

4. A device according to Claim 3, characterized in that the horizontal tubular section (24) is followed downstream by a vertical tubular section (26).

5. A device according to Claim 3 or 4, characterized in that provision is made at the horizontal tubular section (24) for a differential measurement and regulating device of the oxygen for setting the oxygen content of the sewage.

6. A device according to one of Claims 3 to 5, characterized in that provision is made at the horizontal tubular section (20) for a ventilation valve (48).

7. A device according to one of Claims 1 to 6, characterized in that the effective surface area (34) of the aeration device (32) is designed in the form of a spherical cup, a cone, a cone frustum or a cylinder.

8. A device according to one of Claims 1 to 7, characterized in that several tubular bodies (20) with aeration devices (32) are arranged parallel or in series.

## Revendications

1. Installation pour le traitement d'eaux usées au moyen d'une biomasse selon un procédé aérobie, comprenant au moins un corps tubulaire (20) comportant une section tubulaire verticale (22) et présentant une entrée des eaux usées (18) à une extrémité et une sortie des eaux usées (22) à l'extrémité opposée, un dispositif d'aération (32) étant prévu à l'extrémité du côté de l'entrée des eaux usées, caractérisée en ce que le dispositif d'aération (32) est approprié pour réaliser l'aération sur pratiquement la totalité de la section transversale du corps tubulaire (20).

2. Installation suivant la revendication 1, caractérisée en ce que le corps tubulaire (22) est fermé vis-à-vis de l'atmosphère.

3. Installation suivant la revendication 2, caractérisée en ce qu'une section tubulaire horizontale (24) se raccorde à la section tubulaire verticale (22) du corps tubulaire (20).

4. Installation suivant la revendication 3, caractérisée en ce qu'une section tubulaire verticale (26) se raccorde du côté aval à la section tubulaire horizontale (24).

5. Installation suivant l'une des revendications 3 ou 4, caractérisée en ce qu'un dispositif de mesure différentielle d'oxygène et de réglage pour l'ajustement de la teneur en oxygène des eaux usées est prévu sur la section tubulaire horizontale (24).

6. Installation suivant l'une des revendications 3 à 5, caractérisée en ce qu'une soupape de dégagement d'air (48) est prévue sur la section tubulaire horizontale (20).

7. Installation suivant l'une des revendications 1 à 6, caractérisée en ce que la surface active (34) du dispositif d'aération (32) est réalisée sous la forme d'une calotte, d'un cône, d'un tronc de cône ou d'un cylindre.

8. Installation suivant l'une des revendications 1 à 7, caractérisée en ce que plusieurs corps tubulaires (20) avec dispositifs d'aération (32) sont montés en parallèle ou en série.

FIG.1

0 119 205

FIG. 2

0 119 205